# EUROPÄISCHE PATENTSCHRIFT

(11) **EP 2 090 031 B1**
(45) Veröffentlichungstag und Bekanntmachung des Hinweises auf die Patenterteilung: **22.09.2010**
(21) Anmeldenummer: 07819266.3
(22) Anmeldetag: 24.10.2007
(51) Int. Cl.: H04L 12/403, H04L 1/00

(54) **VERFAHREN UND ANORDNUNG ZUR KOMMUNIKATION AUF EINEM LIN-BUS**
METHOD AND ARRANGEMENT FOR COMMUNICATION ON AN LIN BUS
PROCÉDÉ ET INSTALLATION DE COMMUNICATION SUR UN BUS LIN

(30) Priorität: 31.10.2006 DE 102006051222
(43) Veröffentlichungstag der Anmeldung: 19.08.2009
(73) Patentinhaber: Eaton Industries GmbH, 53115 Bonn (DE)
(72) Erfinder: REIDT, Georg, 53913 Swisttal (DE)
(74) Vertreter: Leadbetter, Benedict
(86) Internationale Anmeldenummer: PCT/EP2007/009207
(87) Internationale Veröffentlichungsnummer: WO 2008/052685

(56) Entgegenhaltungen:
- EP-A- 1 298 849
- WO-A-2004/109999
- US-A- 5 499 247

## Beschreibung

### Technisches Gebiet

Die Erfindung betrifft ein Verfahren und Anordnung zur Kommunikation auf einem LIN-Bus, also der Übertragung von Nutzdaten mehrerer LIN-Slaves zu einem LIN-Master innerhalb eines LIN-Frames.

### Stand der Technik

Die Spezifikation der LIN-Bus-Kommunikation ist in einem Firmenverbund vereinbart worden, der sich unter der Adresse www.lin-subbus.org öffentlich darstellt. Die Netzwerkarchitektur wird vornehmlich in mechatronischen Applikationen im Automobil verwendet, wozu beispielsweise auf die Veröffentlichungen von A. Grzemba (und andere) in Elektronik Automotive 04/2003 und Folgeartikel verwiesen werden kann.

Als Stand der Technik wird in 4 Figuren die Datenübertragung auf einem konventionellen LIN-Bus dargestellt; wobei die Figuren zeigen:
Fig. 1 Buspegel während der Kommunikation,
Fig. 2 Verschaltung der Busteilnehmer,
Fig. 3 Master sendet Identifier an einen Slave,
Fig. 4 Kommunikation (Abfragen, Scheduling) mit 4 LIN-Slaves.

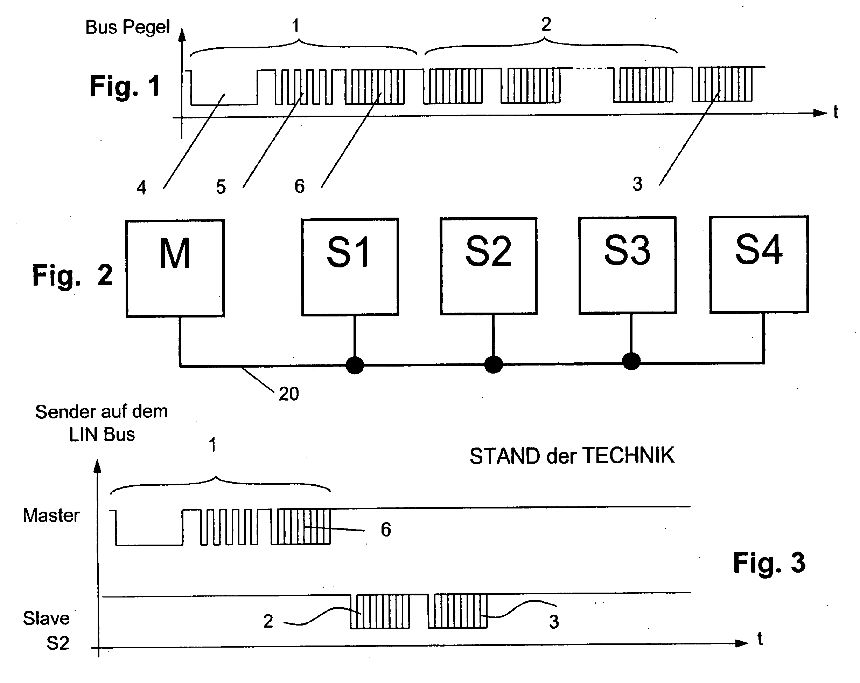

Die Datenübertragung auf dem LIN-Bus basiert auf der im Local Interconnect Network (LIN)-Protokoll definierten Struktur, einem Telegramm oder auch Frame. Ein Frame besteht prinzipiell aus drei Teilen: dem Header 1, dem Datafield.2 und der Checksum 3 (Siehe schematisch in Fig. 1).

Der LIN-Header 1 seinerseits besteht aus drei Elementen, dem Breakfield 4, dem Syncfield 5 und dem LIN-Identifier 6. Das Datafield 2 besteht mindestens aus einem und maximal aus acht Bytes. Die Checksum 3 (Prüfsumme) wird über alle Datenbytes bzw. alternativ über die Datenbytes inklusive LIN-Identifier berechnet und jeweils vom Sendenden LIN-Teilnehmer als LIN-Frame-Abschluss gesendet. Da der LIN-Bus ein Single-Master/Multi-Slave-Bus ist, wird jegliche Kommunikation durch den Master initiiert. Damit also eine Kommunikation stattfinden kann, muss der Master zunächst den LIN-Header auf den LIN-Bus senden. Anhand des im LIN-Header enthaltener LIN-Identifiers, der im gesamten LIN-Netzwerk einem bestimmten Teilnehmer (Master oder Slave) zugeordnet ist, wird entschieden, welcher LIN-Tellnehmer die Datenbytes auf den Bus senden soll. Da jeder Teilnehmer (Master oder auch Slaves) sämtliche Daten auch empfangen kann, muss zweitens definiert sein, wer die empfangenen Daten verarbeiten soll.

Das dargestellte Beispiel in Fig. 2 und 3 verdeutlicht die LIN-Bus-Kommunikation mit folgender Annahme: Ein LIN-Bus-System 20 besteht aus einem Master M und vier Slaves S1, S2, S3, S4. Slave S1 hat den LIN-Identifier 0x10, Slave S2 den LIN-Identifier 0x11, Slave S3 den LIN-Identifier 0x12 und S4 den LIN-Identifier Ox13 zugeordnet erhalten. Jeder Slave soll auf dem ihm zugeordneten LIN-Identifier jeweils ein Nutzdatenbyte senden. Der Master soll das Nutzdatenbyte vom Slave S2 abfragen.

Zunächst sendet der LIN-Master M den LIN-Header 1 mit dem LIN-Identifier 6 = 0x11 auf den Bus. Alle LIN-Slaves empfangen den Identifier, aber nur der Slave S2 reagiert auf den Empfang, da er mit seinem Identifier angesprochen wurde und der Slave S2 sendet sein Nutzdatenbyte und anschließend die zugehörige Checksumme auf den LIN-Bus. Der Master empfängt das Nutzdatenbyte und die Checksumme, prüft anhand der Checksumme, ob die Daten in Ordnung sind und verarbeitet sie weiter, wenn keine Fehlübertragung vorlag.

Beispiele zweier LIN-Bus-Kommunikationssysteme nach dem LIN-Bus-Industriestandard finden sich in der EP 1746783 A1 und in der DE 10147445 A1.

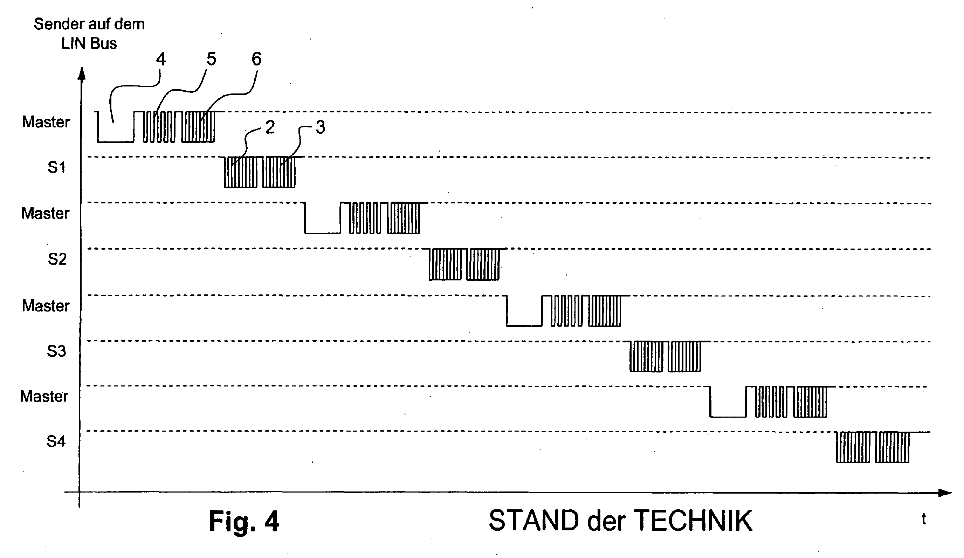

Soll nun von einem Master die Nutzdatenbytes von mehreren Slaves (mindestens zwei) zyklisch abgefragt werden, so muss der Master jeden einzelnen Slave durch Senden eines entsprechenden LIN-Headers mit jeweils den Slaves zugeordneten, passenden LIN-Identifiern der Reihe nach abfragen (pollen). Als Beispiel ist in Fig. 4 das Abfragen von vier LIN-Slaves auf einer Zeitachse dargestellt. Die explizite Abfrage eines Slaves ist relativ zeitintensiv. Das Verhältnis von Protokoll-Overhead (LIN-Header + Checksum) zu den Nutzdatenbytes, die übertragen werden, beträgt bei einem Nutzdatenbyte ca. 4:1

### Darstellung der Erfindung

Es ist die Aufgabe der Erfindung, ein Verfahren und eine Anordnung anzugeben, nach welchem die Kommunikation auf einem Bus nach der LIN-Spezifikation beschleunigt werden kann.

Die Lösung findet sich im 1 und 5. Anspruch, vorteilhafte Ausgestaltungen sind in Unteransprüchen formuliert.

Der LIN-Master und jeder LIN-Siave ist mit einer die konventionelle LIN-Kommunikation nicht einschränkenden Funktionalität erweitert.

Der Ablauf des erfindungsgemäßen Verfahrens stellt sich wie folgt dar.

Der Master startet ein Bus-Setup; er steuert einen Konfigurationsablauf durch Abfrage aller am Bus liegenden Slaves; er vergibt jedem Slave (in vorgebbarer Reihenfolge) eine Knotenadresse, er übermittelt an jeden Slave die aus dem Bus-Setup ermittelte Anzahl der Slaves auf dem Bus; er vergibt für einen Kommunikationszyklus jedem Slave einen Identifier; er schaltet die Slaves für die Kommunikation aktiv; er empfängt die in Serie versendeten Nutzdatenbytes aller Slaves und speichert diese zwischen; er errechnet eine Prüfsumme über alle empfangenen Nutzdatenbytes der Slaves und übermittelt diese an alle Slaves. Weiterhin wird nach dem Senden der Prüfsumme ein Beobachtungsfenster mit endlicher Dauer geöffnet, wobei ein Pegelwechsel des Busses innerhalb des Beobachtungsfensters von rezessiv auf dominant vom Master erkennbar ist. Zur Erfassung des Pegelwechsels im Beobachtungsfenster ist beim Master eine Datenabzweigleitung des RxD-Kanals auf einen digitalen Eingang gelegt. Weiterhin verarbeitet der Master die empfangenen Nutzdatenbytes aller Slaves nach erfolgreicher Übertragung weiter oder er verwirft diese nach fehlerhafter Übertragung.

Die Funktionalität der LIN-Slaves besteht darin, dass jeder den Bussetup verarbeitet; dass jeder Slave seine übermittelte Knotenadresse abspeichert, dass jeder Slave die aus dem Bussetup ermittelte und übermittelte Anzahl der Slaves abspeichert, dass jeder Slave das Aktivschaltungssignal des Masters abspeichert, dass jeder Slave den übermittelten Identifier abspeichert, wonach in jedem Slave sämtliche versendeten Nutzdatenbytes empfangen und zwischengespeichert werden. Bei diesen Vorgängen hört jeder Slave die Kommunikation auf dem Bus mit. Jeder Slave sendet in der Reihenfolge der Knotenadressen seine eigenen Nutzdatenbytes auf den Bus; jeder Slave errechnet nach Empfang von Nutzdatenbytes aller Slaves eine Prüfsumme unter Einschluss der eigenen Nutzdatenbytes und speichert diese zwischen; jeder Slave führt einen Vergleich der vom Master übermittelten Prüfsumme mit der selbst errechneten Prüfsumme durch; jeder Slave übermittelt im Beobachtungsfenster ein Fehlerbyte, wenn Ungleichheit zwischen der eigenen und der vom Master übermittelten Prüfsumme besteht.

Hardwaremäßig sind die Busteilnehmer in Linienstruktur über eine Steuerleitung nach dem daisy-chain-Prinzip untereinander verschaltet.

Der Vorteil der Erfindung besteht darin, dass mit dem Verfahren die zyklische Datenübertragung von Nutzdaten mehrerer Slaves (mindestens zwei) deutlich verbessert wird. Die zeitliche Verbesserung eines Abfragezyklus ist abhängig von der Slave-Anzahl und kann im Vergleich zur Standard-LIN-Telegrammübertragung auf bis zu 25 % der ursprünglichen Zeit verringert werden.

Im folgenden werden alle Bezeichnungen (Slave, Master, Header, Identifier, etc) als Elemente der LIN-Bus-Kommunikation verstanden. Es wird daher im Einzelnen jeweils das Kürzel LIN nicht mehr besonders verwendet, es sei denn, es wird dies zum Unterschied zu einer anderen Bus-Technologie eingesetzt.

### Kurze Beschreibung der Zeichnungen

Das Verfahren wird hier vorzugsweise an einem Beispiel mit einem Master und vier Slaves erläutert. Es sind natürlich auch Kombinationen mit weniger oder mehr Slaves denkbar.

Zur Darstellung der Abläufe werden Figuren verwendet, die im Einzelnen zeigen:

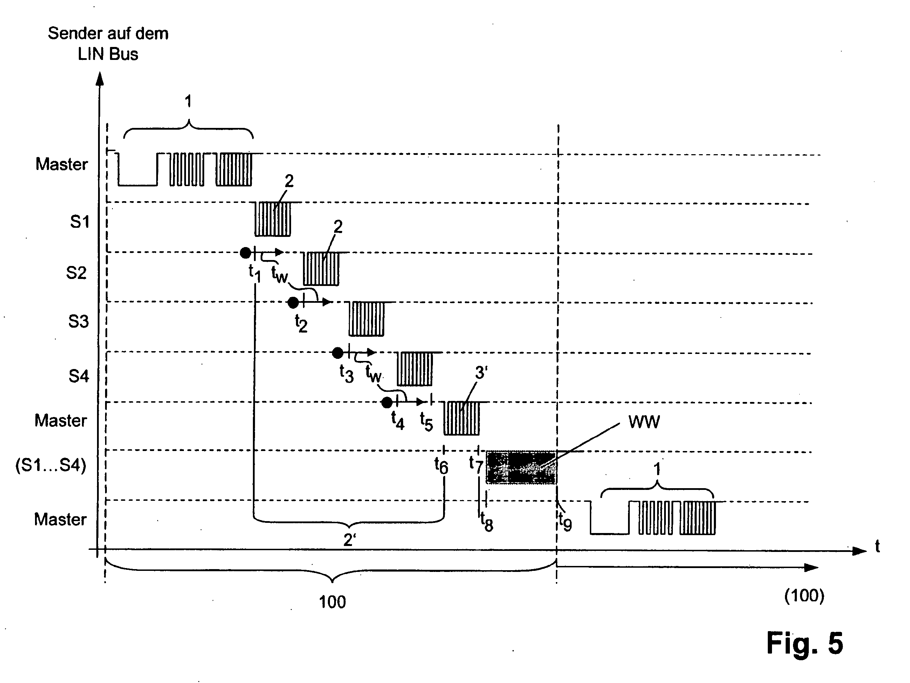

Fig. 5: Kommunikation mit vier Slaves,

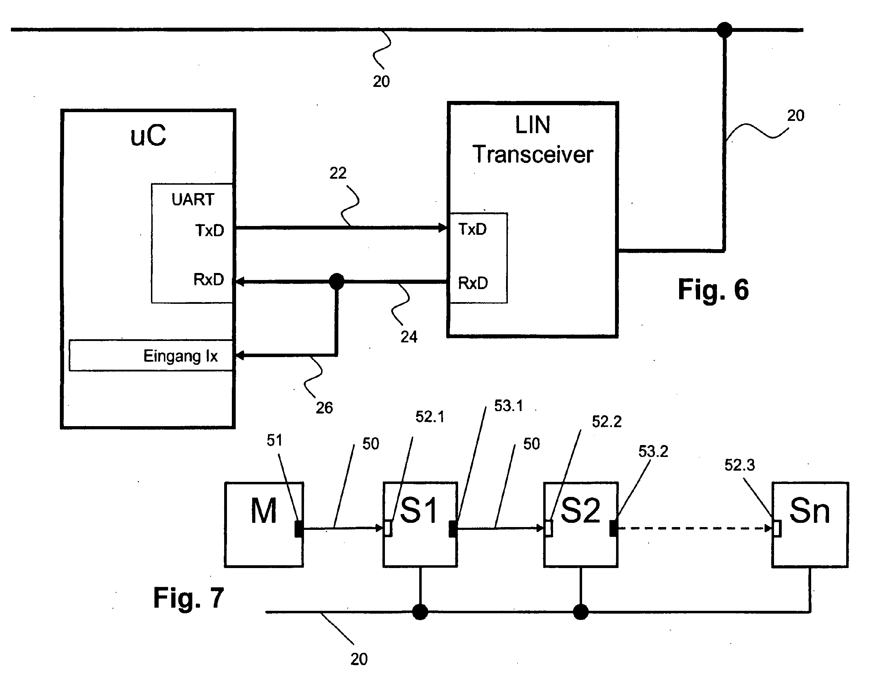

Fig. 6: Darstellung der Abzweigleitung vom RxD-Kanal an einen Eingang,
Fig. 7: Verschaltung der Slaves mit zusätzlicher Steuerleitung,

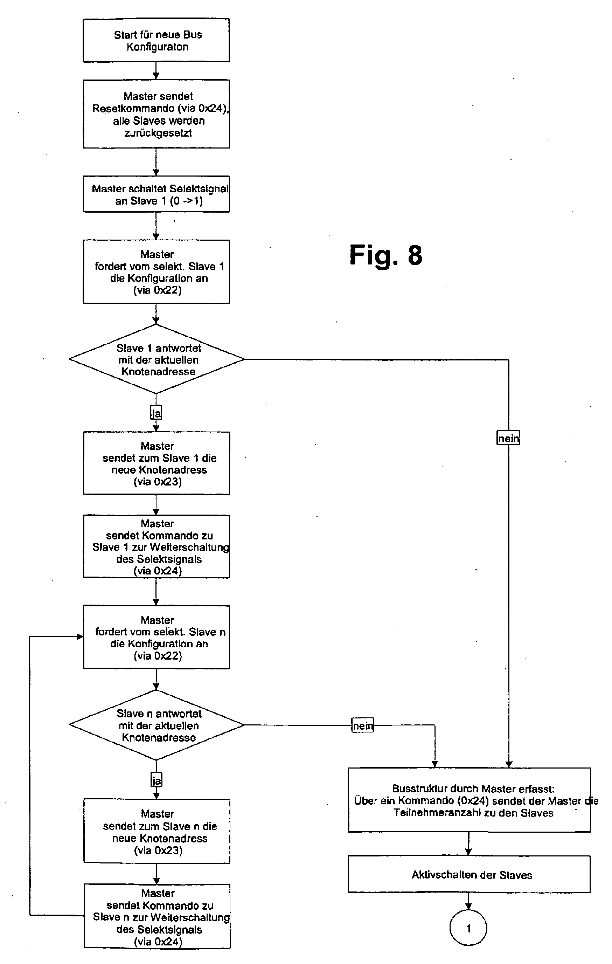

Fig. 8: Ablaufschema Buskonfiguration und

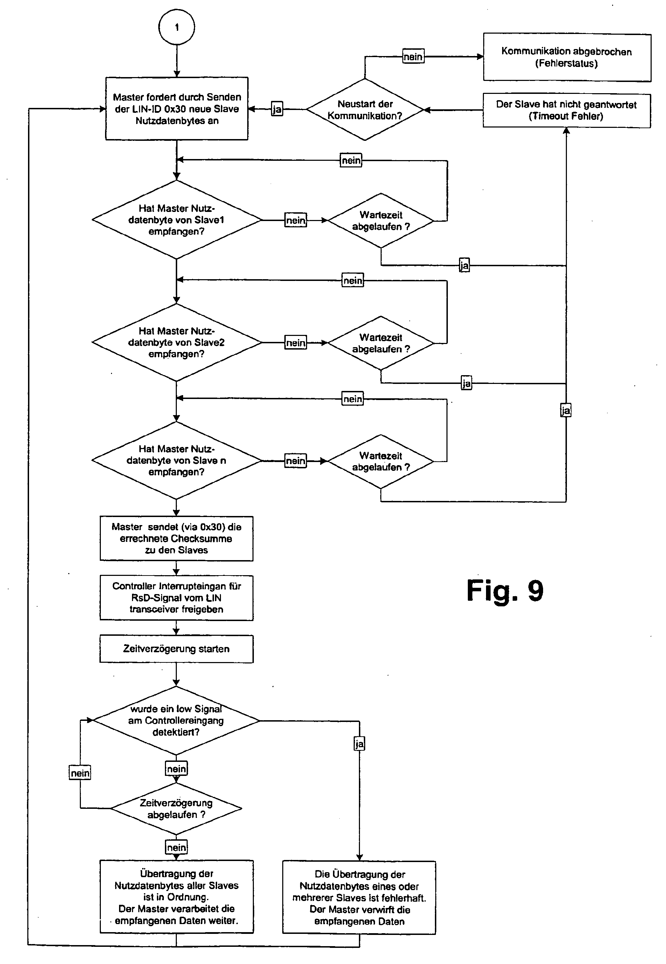

Fig. 9: zyklisches Abfragen der Slaves.

### Verfahrensabläufe gemäß der Erfindung

In Fig. 5 ist das Zeitschema der Kommunikation mit vier Slaves für die erfindungsgemäße Abarbeitung eines Datenrahmens dargestellt. Zunächst wird über einen Automatismus (Bussetup wird zu Fig. 8 noch detailliert erklärt) für jeden einzelnen Slave (S1 ... S4) eine eindeutige Knotenadresse vergeben. In diesem Beispiel werden die Knotenadressen 1 bis 4 in aufsteigender Reihenfolge vom Master M aus vergeben. Es sind aber auch beliebig andere Knotenadresse und Reihenfolgen denkbar.

Wird vom Master eine automatische Bus-Konfiguration mit der Vergabe der Knotenadressen vorgenommen, so ist dem Master die angeschlossene Anzahl der Slaves (hier 4) bekannt. Bei einer manuellen Vergabe der Knotenadressen, beispielsweise direkt am Slave durch z.B. eine Schaltereinstellung, ist die Anzahl der angeschlossenen Teilnehmer dem Master explizit mitzuteilen.

Danach sendet der Master einen Frame, mit dem jeder Slave die Anzahl der am Bus 20 angeschlossenen Teilnehmer bekannt gegeben wird. D.h. jeder Teilnehmer (Master und alle Slaves) weiß, wieviel Bus-Teilnehmer angeschlossen sind. In diesem Beispiel ist die Slave-Teilnehmeranzahl gleich 4. Es wird hier vorzugsweise davon ausgegangen, dass jeder Slave ein Nutzdatenbyte 2 zum Master M übertragen soll, was bedeutet, dass die Teilnehmeranzahl gleich der Summe aller Nutzdatenbytes der Slaves ist. Es ist natürlich auch denkbar, dass verschiedenartige Slavetypen auch unterschiedlich viele Nutzdatenbytes zum Master übertragen können.

Wesentlich am vorgeschlagenen Verfahren ist es, dass nach dem Senden des Headers 1 vom Master nicht nur ein Slave antwortet, sondern dass alle Slaves in festgelegter Reihenfolge antworten, nicht notwendigerweise in aufsteigender Reihe, hier vorzugsweise in der Reihenfolge der vergebenen Knotenadressen 1 bis 4.

Dazu wird ein Identifier ausgewählt und bestimmt, der für die vorgeschlagene Slavedatenübertragung genutzt wird. Die Standard-Kommunikation auf dem LIN-Bus wird dadurch nicht beeinträchtigt, bzw. diese kann in gleicher Weise durchgeführt werden. Kommunikation ist auch durch Einsatz anderen LIN-Identifier möglich. Es ist auch denkbar, dass man mehrere Identifier für die vorgeschlagene Datenübertragung definiert, um z.B. ein dynamisches Scheduling mit verschiedenen Datenrahmen 100 und damit unterschiedlichen Nutzdaten zu ermöglichen.

Im Folgenden wird der Ablauf des vorgeschlagenen Kommunikationsmechanismus beschrieben, der nach der Erfindung eine Beschleunigung und damit eine Optimierung darstellt.
1. Anstoßen des Bussetups und Initiieren der Kommunikation durch den Master durch Senden des Headers. Der im Header festgelegte Identifier kennzeichnet, dass die erfindungsgemäßen Abarbeitung eines Datenrahmens erfolgt (siehe Fig. 5 und 9).
2. Als Antwort (Zeitpunkt t1) sendet nun der Slave mit der Knotenadresse 'eins' als erster sein Nutzdatenbyte 2 auf den Bus. Da alle anderen Slaves die gesendeten Daten mithören, weiß jetzt der Bus-Knoten 'zwei', dass der Slave 'eins' sein Nutzdatenbyte 2 gesendet hat, so dass der Slave 'zwei' nun (Zeitpunkt t2) sein Nutzdatenbyte 2 sendet. Im Anschluss daran sendet der Slave 'drei' sein Nutzdatenbyte (Zeitpunkt t3). Dies läuft so weiter, bis dass der Slave mit der letzten Knotenadresse (hier 4) sein Nutzdatenbyte gesendet hat (Zeit t4 bis t5).
   Zur Überwachung der Aktivität jeden Slaves ist ein Zeitfenster (Wartezeit tw) eingestellt, innerhalb dessen der Master das Senden des Slaves erwartet und registriert. Würde ein Slave in der Wartezeit tw nicht senden, so bricht der Master das Abarbeiten eines Datenrahmens ab und initiiert erneut den Start einer Kommunikation oder bricht das Abarbeiten generell ab. Siehe Wenn/Dann-Abfrage in Fig. 9 oben rechts. Mit einem vergleichbarem Zeitüberwachungsmechanismus sind die Slaves ausgestattet. Im Fehlerfall können danach die Slaves ihren aktuellen Zustand abbrechen und werden wieder vorbereitet für den Empfang eines neuen Datenrahmens.
3. Der Master empfängt die Nutzdatenbytes 2 und speichert sie zwischen. Im Master liegen nun alle Nutzdatenbytes der Slaves vor. Dem Master ist zu diesem Zeitpunkt noch nicht bekannt, ob alle Nutzdatenbytes der Slaves korrekt übertragen wurden. Als nächstes berechnet der Master (nach Zeitpunkt t5) über alle Nutzdatenbytes eine Prüfsumme 3'.
4. Alle gesendeten Nutzdatenbytes der einzelnen Slaves werden nicht nur vom Master empfangen und weiterverarbeitet, sondern auch jeder Slave empfängt alle Nutzdatenbytes der anderen Slaves. Wie der Master selbst, berechnet auch jeder Slave über sein eigenes und über die Nutzdatenbytes der anderen Slaves eine Prüfsumme und hält somit diese ohne sie abzusenden selbst bereit.
5. Der Master als auch alle Slaves haben nun eine Prüfsumme über alle Nutzdaten berechnet. In einem nächsten Schritt muss nun geprüft werden, ob alle Teilnehmer am Bus die gleiche Prüfsumme errechnet haben, welches ein Indiz dafür ist, dass alle Nutzdatenbytes korrekt zum Master übertragen wurden. Dazu sendet der Master seine berechnete Prüfsumme 3' auf den Bus (Zeit t6 bis t7).
6. Dann vergleicht jeder Slave die empfangene Prüfsumme, die vom Master gesendet wurde, mit der selbst berechneten Prüfsumme. Sind beide Prüfsummen im Slave identisch, so ist dies eine positive Bestätigung, dass das Nutzdatenbyte vom entsprechenden Slave im gesamten Datenrahmen 100 des Telegramms korrekt zum Master übertragen wurde. Diese Prüfung führt jeder Slave nach dem Empfang der gesendeten Prüfsumme des Masters durch. D.h. dass nach diesem Schritt jeder Slave weiß, ob sein eigenes Nutzdatenbyte korrekt bzw. nicht korrekt übertragen wurde. Dieser Vorgang ist zum Zeitpunkt t8 abgeschlossen.
7. In einem weiteren Schritt muss nun der Master von allen Slaves erfahren, ob die Prüfsummenberechnung der Slaves in Ordnung war. Dazu überwacht der Master nach der von ihm gesendeten Prüfsumme den Bus für ein bestimmtes Zeitintervall (Zeitfenster der Dauer t8 bis t9). Dieses Überwachungs- oder Beobachtungsfenster WW wird verwendet, damit ein Slave durch das Senden eines Fehlercodes dem Master mitteilen kann, dass seine Prüfsummenberechnung nicht in Ordnung war. Im Fehlerfall empfängt der Master das Fehlerzeichen und weiß somit, dass ein Nutzdatenbyte von einem Slave nicht korrekt an ihn übermittelt wurde. Es wäre auch denkbar, dass jeder Slave ein spezifisches Fehlerzeichen sendet, so dass der Master genau identifizieren kann, welches empfangene Nutzdatenbyte falsch ist.
8. Wenn zwei Slaves gleichzeitig oder fast gleichzeitig auf den Bus senden, dann werden die Datenbits teilweise überschrieben und somit zerstört, so dass der Master die übertragenen Daten nicht mehr erkennt. Dies ist bei dem vorher beschriebenen Prozess aber möglich, denn es könnten zwei oder mehrere Slaves falsche Prüfsummen ermittelt haben, die dann auch ihre Fehlerbytes im Beobachtungsfenster senden müssten.

Die in Fig. 6 gezeigte Schaltungsanordnung wird vom Master verwendet, um diesen Fall auch sicher zu erkennen und auszuwerten und löst die vorgenannte Unzulänglichkeit.

In der LIN-Masterelektronik wird parallel zum RxD-Empfangskanal 24, über den der Mikrocontroller mit seiner UART die Daten vom LIN-Transceiver empfängt, eine weitere Leitung (Buspegelüberwachung) 26 auf einen digitalen Eingangspin des Mikrocontrollers uC gelegt. Dieser ist idealerweise als interruptfähiger Eingangspin ausgeführt, damit ein Pegelwechsel (Flanke) sicher erkannt wird. Es ist aber auch denkbar, dass ein einfacher Eingangspin verwendet wird, der vom Mikrocontroller entsprechend schnell abgefragt wird. Durch diese Erweiterung empfängt der Master jetzt zum einen ein evtl. Fehlerbyte am RxD-Eingang der UART. Zweitens kann er aber auch einen dominanten Buspegel am digitalen Eingangspin detektieren. Da der Master nun mit Priorität diesen digitalen Eingang überwacht, wird es notwendig, ein zusätzliches Kriterium zu definieren, welches den Frame abschließt. Dieses Kriterium wird hier beispielsweise durch eine Zeitvorgabe definiert, in dem der Slave Sx sein Fehlerbyte zum Master gesendet haben muss. Wechselt der Bus-Pegel innerhalb des Beobachtungsfensters WW (siehe Fig. 5: t8 bis t9) nicht auf dominant, so wurde auch von keinem Slave ein Fehlerbyte gesendet. Nach Ablauf der Zeit t9 im Beobachtungsfenster ist der Datenrahmen abgeschlossen und es kann ein neuer Datenrahmen 100 gestartet werden. Der hier beschriebene Abschluss des Datenrahmens über ein definiertes Überwachungsfenster ist eine erste Lösung. Es wäre auch denkbar, dass man ein zusätzliches Steuersignal verwendet.

Der detaillierte Ablauf der vorgeschlagenen Abarbeitung des Datenrahmens 100 wird weiterhin in einem Ablaufdiagramm (siehe Fig. 8) dargestellt. Da nur im Fehlerfall von einem oder mehrerer Slaves im Beobachtungsfenster WW gesendet werden kann, wechselt auch nur in diesem Fall der Buspegel von rezessiv auf dominant (1 → 0). Dieser Signalwechsel ist für den Master auswertbar und ein Zeichen dafür, dass mindestens ein Nutzdatenbyte eines Slaves nicht korrekt übertragen wurde, wodurch die empfangenen Nutzdatenbytes 2 aller Slaves (S1, ...Sn) nach Übertragung verworfen werden.

Damit auch unterschiedliche Konfigurationen, d.h. verschiedene Anzahl von angeschlossenen Teilnehmer am Bus und/oder Anzahl von Nutzdatenbytes von Slave-Anschaltungen vom Master aus gesteuert bzw. übertragen werden können, muss der Master nach jedem Einschalten des Systems eine Überprüfung und ggf. eine Konfiguration der Teilnehmer am Bus vornehmen.

Nachfolgend wird dieser automatische Mechanismus beschrieben.

Dazu werden 3 Identifier definiert und reserviert, die für das Lesen und das Schreiben von Daten und zum Senden von Kommandos verwendet werden. Als Beispiel sollen hier folgende Identifier verwendetet werden (vom Master aus gesehen):
1) 0x22 Lesen (z.B. Abfragen der Knotenadresse eines Slaves)
2) 0x23 Schreiben (z.B. Schreiben einer neuen Knotenadresse zum Slave)
3) 0x24 Senden von beliebigen Kommandos

Zusätzlich zu der Buskommunikation kommt eine Steuerleitung 50 (siehe Fig. 7) zum Einsatz, die jeweils zwischen zwei benachbarten Busteilnehmern (M, S1 ... Sn) geschaltet ist. Der Master ist mit seinem steuerbaren Ausgang 51 über eine Steuerleitung 50 mit dem ersten Slave S1 über dessen Steuereingang 52.1 verbunden. Der erste Slave S1 ist wiederum mit seinem steuerbaren Ausgang 53.1 an den Steuereingang 52.2 des zweiten Slaves S2 verbunden. Diese Verschaltung der Steuerleitungen ist bis zum Ende des Busses (bis zum letzten Slave Sn) ausgeführt. Über die Steuerleitung wird der Teilnehmer "selektiert", der auf die "Knotennummernanfrage" des Masters über den Identifier 0x22 reagieren soll. Dies kann immer nur ein Slave sein, genau der, der am Steuereingang eine logische 1 und am Steuerausgang eine logische 0 anliegen hat.

Zu Beginn der automatischen Konfiguration sendet der Master ein Resetkommando (siehe Ablaufdiagramm in Fig. 8) auf den Bus und setzt somit alle angeschlossenen Slaves zurück. Anschließend setzt der Master seinen Steuerausgang auf 1 und "selektiert" damit den ersten Slave. Nun fragt der Master über den Identifier 0x22 die Knotenadresse des ersten (selektierten) Slaves ab. Antwortet dieser, so erhält er über den Identifier 0x23 vom Master ggf. einen neue Knotenadresse. Ein anschließendes Kommando vom Master setzt den Steuerausgang des ersten Slaves von 0 auf 1 und selektiert somit den zweiten Slave. Die Knotenadressvergabe läuft dann solange weiter, bis der Master alle Knoten im Bus konfiguriert hat. Als Abschluss dieser Aktion sendet der Master über den Identifier 0x24 die von ihm ermittelte Teilnehmeranzahl zu jedem Slave. Nun kann die zyklische Datenübertragung nach dem vorgeschlagenen Verfahren, wie oben beschrieben, beginnen.

Weiterhin wird mindestens eine Anordnung zur Durchführung des vorgeschlagenen Verfahrens beansprucht, bei der die Slaves (S1, ...Sn) als industrielle Schaltgeräte ausgebildet sind. Als solche können Motorstarter, Schütze, Leistungsschalter, Frequenzumrichter, aber auch Sensors-Systeme, wie z.B. Geräte zur Erfassung von Temperaturen, Strömen, Schalterstellungen usw. zum Einsatz kommen.

### Liste der Bezugszeichen

- 1: Header
- 2: Datafield, Nutzdatenbyte
- 2': sämtliche Nutzdatenbytes
- 3: Checksum, Prüfsumme (LIN Standard)
- 3': Prüfsumme im Datenrahmen 100
- 4: Breakfield
- 5: Syncfield
- 6: Identifier
- 20: Bus
- 22: TxD-Sendekanal
- 24: RxD-Empfangskanal
- 26: Datenabzweig, Pegelüberwachung
- 50: Steuerleitung
- 51: steuerbarer Ausgang am Master
- 52.1 52.2 etc.: Steuereingänge
- 53.1 53.2 etc.: Steuerausgänge
- 100: Datenrahmen
- M: Master
- S1 ... Sn: Slaves
- WW: Beobachtungsfenster
- t1 ... t9: Zeitpunkte für Datenrahmen 100
- tw: Wartezeit

## Patentansprüche

1. Verfahren zur Kommunikation auf einem nach dem Local Interconnect Network, LIN-Protokoll arbeitenden Bus mit einem LIN-Master (M) und mindestens einem Slave unter Verwendung mindestens des LIN-Protokolls der Schicht 2 und der LIN-Spezifikation,
**dadurch gekennzeichnet, dass** der LIN-Master (M) mit einer die konventionelle LIN-Kommunikation nicht einschränkenden Funktionalität zur Abarbeitung mindestens eines Datenrahmens (100) erweitert ist, wobei der Master (M) die folgenden Verfahrensschritte durchführt:
- Vergeben einer individuelle Knotenadresse an jeden Slave (S1, ...Sn) in vorbestimmter Reihenfolge,
- Übermitteln der aus einem Bussetup ermittelten Anzahl der Slaves an jeden Slave,
- Vergeben eines einzigen Identifiers an jeden Slave für die Abarbeitung des Datenrahmens (100),
- Empfangen der in Serie im Datenrahmen (100) versendeten Nutzdatenbytes (2) aller Slaves und Zwischenspeichern der Nutzdatenbytes (2),
- Errechnen einer Prüfsumme (3') über alle empfangenen Nutzdatenbytes der Slaves und Übermitteln dieser an alle Slaves,
und weiterhin dass nach dem Senden der Prüfsumme (3') ein Beobachtungsfenster (WW) mit endlicher Dauer geöffnet ist, wobei ein Wechsel des Buspegels innerhalb des Beobachtungsfensters (WW) auf dominant vom Master (M) erkennbar ist,
und dass der Master den Pegelwechsel im Beobachtungsfenster (WW), der von einem RxD-Kanal durch eine Datenabzweigleitung auf einen digitalen Eingang im Master gelangt, erfasst
und weiterhin der Master (M) die empfangenen Nutzdatenbytes (2) aller Slaves (S1, ...Sn) nach Übertragung ohne Pegelwechsel weiterverarbeitet oder nach Übertragung mit Pegelwechsel verwirft,
und dass jeder LIN-Siave mit einer die konventionelle LIN-Kommunikation nicht einschränkenden Funktionalität zur Abarbeitung des mindestens einen Datenrahmens (100) erweitert ist, wobei die Slaves (S1,...,Sn) die folgenden Verfahrensschritte durchführen:
- Speichern der individuell übermittelten Knotenadresse,
- Speichern der aus einem Bussetup ermittelten und übermittelten Anzahl der Slaves,
- Speichern des übermittelten Identifiers, wonach in jedem Slave (S1, ...Sn) sämtliche versendeten Nutzdatenbytes aller Slaves im Datenrahmen (100) empfangen und zwischengespeichert werden,
- Senden der eigenen Nutzdatenbytes (2) im Datenrahmen (100) in einer von den Knotenadressen bestimmten Reihenfolge,
- Errechnen einer Prüfsumme unter Einschluss der eigenen Nutzdatenbytes (2) nach Empfang sämtlicher Nutzdatenbytes (2') aller Slaves und Zwischenspeicherung der Prüfsumme,
- wobei jeder Slave (S1, ...Sn) einen Vergleich der vom Master (M) übermittelten Prüfsumme (3') mit der selbst errechneten Prüfsumme durchführt,
- und jeder Slave (S1, ...Sn) im Beobachtungsfenster (WW) ein Fehlerbyte übermittelt, wenn Ungleichheit zwischen der eigenen und der vom Master übermittelten Prüfsumme besteht,
und dass benachbarte Busteilnehmer (M, S1.. Sn) über je eine Steuerleitung (50) verschaltet sind.

2. Verfahren nach Anspruch 1, **dadurch gekennzeichnet, dass** vor Beginn der Abarbeitung mindestens eines Datenrahmens (100) mit einem Bussetup gestartet wird.

3. Verfahren nach Anspruch 2, **dadurch gekennzeichnet, dass** der Master (M) den Bussetup startet und einen Konfigurationsablauf steuert durch Abfrage aller am Bus (20) liegenden Slaves (S1, ...Sn) und schaltet abschließend die Slaves (S1 ... Sn) zur Abarbeitung mindestens eines Datenrahmens (100) aktiv.

4. Verfahren nach einem der vorhergehenden Ansprüche, **dadurch gekennzeichnet, dass** eine Wartezeit (tw) im Master (M) und in den Slaves implementiert ist, um das Ausbleiben der Nutzdatenbyte-Übermittlung mindestens eines Slaves zu erkennen.

5. Anordnung zur Durchführung eines der Verfahren nach einem der vorhergehenden Ansprüche, **dadurch gekennzeichnet, dass** die Slaves (S1, ...Sn) als industrielle Schaltgeräte ausgebildet sind.

## Claims

1. Method for communication on a bus which operates in accordance with the Local Interconnect Network, LIN, protocol and has a LIN master (M) and at least one slave using at least the layer 2 LIN protocol and the LIN specification, **characterised in that** the LIN master (M) is extended with a functionality, which does not restrict conventional LIN communication, for executing at least one data frame (100), the master (M) carrying out the following method steps:
- assigning an individual node address to each slave (S1, ... Sn) in a predetermined order,
- transmitting the number of slaves determined from a bus setup to each slave,
- assigning a unique identifier to each slave for executing the data frame (100),
- receiving the payload bytes (2), sent in series in the data frame (100), of all the slaves and temporarily storing the payload bytes (2),
- calculating a checksum (3') via all the received payload bytes of the slaves and transmitting the checksum to all the slaves,
and furthermore **in that** a finite-duration observation window (WW) is opened after the sending of the checksum (3'), a change of the bus level within the observation window (WW) to dominant being detectable by the master (M),
and **in that** the master records the level change in the observation window (WW), which passes from an RxD channel to a digital input in the master through a data branch line,
and furthermore the master (M) further processes the received payload bytes (2) of all the slaves (S1, ... Sn) after transmission without a level change or rejects those after transmission with a level change,
and **in that** each LIN slave is extended with a functionality, which does not restrict conventional LIN communication, for executing the at least one data frame (100), the slaves (S1, ... Sn) carrying out the following method steps:
- storing the individually transmitted node address,
- storing the number of slaves determined from a bus setup and transmitted,
- storing the transmitted identifier, after which in each slave (S1, ... Sn) all of the sent payload bytes of all the slaves in the data frame (100) are received and temporarily stored,
- sending the slave's own payload bytes (2) in the data frame (100) in an order determined by the node addresses,
- calculating a checksum including the slave's own payload bytes (2) after reception of all of the payload bytes (2') of all the slaves and temporarily storing the checksum,
- each slave (S1, ... Sn) carrying out a comparison of the checksum (3') transmitted by the master (M) with the checksum calculated by the slave itself,
- and each slave (S1, ... Sn) transmitting in the observation window (WW) an error byte if there is disparity between its own checksum and the checksum transmitted by the master,
and **in that** adjacent bus subscribers (M, S1, ... Sn) are each interconnected via a control line (50).

2. Method according to claim 1, **characterised in that** a bus setup is started up before the commencement of the execution of at least one data frame (100).

3. Method according to claim 2, **characterised in that** the master (M) starts the bus setup and controls a configuration sequence by interrogating all the slaves (S1, ... Sn) positioned on the bus (20) and finally activates the slaves (S1, ... Sn) for executing at least one data frame (100).

4. Method according to one of the preceding claims, **characterised in that** a waiting time (tw) is implemented in the master (M) and in the slaves to detect when at least one slave does not transmit the payload bytes.

5. Arrangement for carrying out one of the methods according to one of the preceding claims, **characterised in that** the slaves (S1, ... Sn) are embodied as industrial switchgear.

## Revendications

1. Procédé de communication sur un bus fonctionnant selon le protocole LIN (Local Interconnect Network), avec un maître LIN (M) et au moins un esclave, en utilisant au moins le protocole LIN de la couche 2 et la spécification LIN, **caractérisé par le fait que** le maître LIN (M) est complété par une fonctionnalité pour traiter au moins une trame de données (100), qui ne limite pas la communication LIN conventionnelle, le maître (M) exécutant les étapes de procédé suivantes:
- allocation d'une adresse de noeud individuelle à chaque esclave (S1, ...Sn) dans un ordre prédéterminé,
- communication à chaque esclave du nombre d'esclaves déterminé à partir d'une configuration de bus,
- allocation d'un identifiant unique à chaque esclave pour le traitement de la trame de données (100),
- réception des octets de données utiles (2) de tous les esclaves envoyés en série dans la trame de données (100) et mémorisation temporaire des octets de données utiles (2),
- calcul d'une somme de contrôle (3') sur tous les octets de données utiles reçus des esclaves et communication de cette somme à tous les esclaves
et, en outre, **par le fait qu'**après l'envoi de la somme de contrôle (3'), une fenêtre d'observation (WW) de durée finie est ouverte, un passage du bus au niveau dominant pouvant être identifié par le maître (M) à l'intérieur de la fenêtre d'observation (WW)
et **par le fait que** le maître détecte le changement de niveau dans la fenêtre d'observation (WW) qui arrive d'un canal RxD à une entrée numérique du maître en passant par une ligne de dérivation de données
et, en outre, le maître (M) soumet les octets de données utiles reçus (2) de tous les esclaves (S1, ...Sn) à un traitement supplémentaire après une transmission sans changement de niveau ou les rejette après une transmission avec changement de niveau
et **par le fait que** chaque esclave LIN est complété par une fonctionnalité pour traiter la au moins une trame de données (100), qui ne limite pas la communication LIN conventionnelle, les esclaves (S1, ...Sn) exécutant les étapes de procédé suivantes:
- mémorisation de l'adresse de noeud communiquée individuelle,
- mémorisation du nombre d'esclaves déterminé à partir d'une configuration de bus et communiqué,
- mémorisation de l'identifiant communiqué, après quoi l'ensemble des octets de données utiles envoyés de tous les esclaves est reçu dans la trame de données (100) et mémorisé temporairement dans chaque esclave (S1, ... Sn),
- émission des octets de données utiles spécifiques propres (2) dans la trame de données (100) dans un ordre déterminé par les adresses de noeud,
- calcul d'une somme de contrôle en incluant les octets de données utiles spécifiques propres (2) après réception de l'ensemble des octets de données utiles (2') de tous les esclaves et mémorisation temporaire de la somme de contrôle,
- chaque esclave (S1, ...Sn) procédant à une comparaison de la somme de contrôle (3') communiquée par le maître (M) avec la somme de contrôle qu'il a lui-même calculée
- et chaque esclave (S1, ...Sn) communiquant un octet d'erreur dans la fenêtre d'observation (WW) lorsqu'apparaît une inégalité entre sa propre somme de contrôle et la somme de contrôle communiquée par le maître,
et **par le fait que** des abonnés de bus voisins (M, S1...Sn) sont interconnectés chacun par le biais d'une ligne de commande (50).

2. Procédé selon la revendication 1, **caractérisé par le fait que** l'on commence par une configuration de bus avant que débute le traitement d'au moins une trame de données (100).

3. Procédé selon la revendication 2, **caractérisé par le fait que** le maître (M) démarre la configuration de bus et commande le déroulement d'une configuration en interrogeant tous les esclaves (S1, ...Sn) participant au bus (20) et termine en rendant les esclaves (S1, ...Sn) actifs pour le traitement d'au moins une trame de données (100).

4. Procédé selon l'une des revendications précédentes, **caractérisé par le fait qu'**un temps d'attente (tw) est appliqué dans le maître (M) et dans les esclaves pour détecter l'absence de communication des octets de données utiles d'au moins un esclave.

5. Dispositif pour exécuter un des procédés selon l'une des revendications précédentes, **caractérisé par le fait que** les esclaves (S1, ...Sn) sont exécutés en tant que dispositifs de commutation industriels.
